# EUROPÄISCHE PATENTANMELDUNG

(11) **EP 0 913 312 A2**
(43) Veröffentlichungstag der Anmeldung: **06.05.1999**
(21) Anmeldenummer: 98119671.0
(22) Anmeldetag: 17.10.1998
(51) Int. Cl.: B62B 9/14

(54) **Schutzvorrichtung für Kinderwagen**

(30) Priorität: 28.10.1997 DE 29719109 U; 28.01.1998 DE 29801939 U; 01.07.1998 DE 19829435; 16.10.1998 DE 19847856
(71) Anmelder: Vigeant, Annette, 67549 Worms (DE)
(72) Erfinder: Vigeant, Annette, 67549 Worms (DE)
(74) Vertreter: Zmyj, Erwin, Dipl.-Ing., Dipl.-Wirtsch.-Ing.

(57) **Zusammenfassung**

An einem Kinderwagen (12) ist beispielsweise am Unterboden eine Schutzvorrichtung (3) angeordnet, die zwei federbelastete Rollen (4, 5) aufweist, von denen die eine Rolle zur Aufnahme einer Regenschutzabdeckung und die andere Rolle zur Aufnahme einer Insektenschutzabdeckung dient. Die Schutzabdeckung (8) ist von der Rolle (4) abziehbar und mit ihrem Ende an einem Haken eines Klappverdeckes (14) einhängbar. Die Schutzabdeckung ist auf eine Breite zusammenfaltbar, die der Länge der Rolle (4) entspricht.

## Beschreibung

Die Erfindung bezieht sich auf eine Schutzvorrichtung für Kinderwagen mit einer zusammenfaltbaren Abdeckung und einer am Kinderwagen festlegbaren Haltevorrichtung, mit der die Abdeckung verbindbar ist und die zur Aufnahme der Abdeckung im unbenutzten Zustand dient.

Eine bekannte Schutzvorrichtung dieser Art ist aus der EP-A-0339902 bekannt. Dort ist ein verschließbares Behältnis entweder am Verdeck des Kinderwagens oder am Schubbügel festlegbar, das zur Aufnahme der zusammengefalteten Abdeckung, die als Regenschutz dient, vorgesehen ist. Dabei ist die Abdeckung mittels Druckknopf im Inneren des Behältnisses mit diesem verbindbar, so daß diese Abdeckung nicht verlorengehen kann und stets wieder in das Behältnis zurückgebracht wird, so daß die Schutzabdeckung gegen Regen stets griffbereit zur Verfügung steht und im unbenutzten Zustand praktisch störungsfrei weggeräumt ist.

Nachteilig bei dieser Schutzvorrichtung ist jedoch die Tatsache, daß die Abdeckung stets mühsam zusammengelegt und im Bedarfsfalle wieder mit verhältnismäßig großem Zeitaufwand auseinandergefaltet und über den Kinderwagen gespannt werden muß. Dies kann bei plötzlich einsetzendem Regen zu lange dauern.

Aufgabe der Erfindung ist es, eine Schutzvorrichtung der weiter oben angegebenen Art so auszugestalten, daß sie im Bedarfsfalle rasch in die Gebrauchsstellung und wieder in die zusammengelegte Stellung überführbar ist.

Diese Aufgabe wird erfindungsgemäß bei der Schutzvorrichtung der eingangs erläuterten Art dadurch gelöst, daß die Haltevorrichtung einen lösbar am Kinderwagen festlegbaren Rahmen und mindestens eine am Rahmen anbringbare in Drehrichtung federbelastete Rolle zum Aufwickeln der Abdeckung im zusammengefalteten Zustand aufweist, mit der die Abdeckung lösbar verbunden ist.

Während bei der bekannten Vorrichtung die Abdeckung zuerst seitlich zusammengefaltet und dann zu einem groben Wickel aufgewickelt werden muß, um diesen Wickel dann in dem Behälter unterzubringen, ist es nach der vorliegenden Erfindung nur notwendig, die Abdeckung durch seitliches Einschlagen auf eine Breite zu bringen, wie dies der Länge der federbelasteten Rolle entspricht, worauf dann durch einen kurzen Zug die in der Rolle vorgesehene Verrastung gelöst wird, damit die Abdeckung durch die federbelastete Rolle aufgerollt werden kann, wie dies bei Sonnenschutzrollos, die als Springrollos bekannt sind, der Fall ist. Die Abdeckung bleibt üblicherweise mit der Rolle verbunden, ist aber von dieser leicht lösbar, um die Abdeckung beispielsweise reinigen oder reparieren zu können. Die hauptsächliche Zeitersparnis tritt beim Überführen der Abdeckung aus der Ruhestellung in die Gebrauchsstellung ein, da hier die Abdeckung nur von der Rolle abgezogen und über den Kinderwagen ausgebreitet wird.

Vorzugsweise weist der Rahmen zumindest eine Lagervorrichtung für eine zugeordnete, federbelastete Rolle auf. Bei einer bevorzugten Ausgestaltung der Erfindung weist der Rahmen zwei Lagervorrichtungen für die Aufnahme von zwei federbelasteten Rollen auf, von denen eine für die Aufnahme einer Insektenschutzabdeckung vorgesehen ist. Hierdurch ist es nicht notwendig, die Abdeckungen gegeneinander auszutauschen oder auch die Rollen mit darauf vorgesehenen entsprechenden Abdeckungen auszutauschen, sondern beide Schutzabdeckungen können gleichzeitig mitgeführt werden.

Damit die Schutzvorrichtung im Bedarfsfalle leicht am Kinderwagen angebracht und von diesem entfernt werden kann, sind nach der vorliegenden Erfindung zwei bevorzugte Anbringungsmöglichkeiten vorgesehen. Die erste Möglichkeit besteht darin, daß der Rahmen mit Klemmen für die lösbare Befestigung am Schubbügel des Kinderwagens versehen ist. Die zweite Ausgestaltung ist dadurch gekennzeichnet, daß am Boden des Kinderwagens Halterungen für die lösbare Befestigung des Rahmens vorgesehen sind. Diese Anbringungsart eignet sich in besonders vorteilhafter Weise für die Anbringung eines Rahmens mit zwei federbelasteten Rollen für die Mitführung einer Schutzabdeckung, die als Regenschutz dient, und einer Schutzabdeckung, die gegen Insekten eingesetzt wird, weil bei dieser Anordnungsart die geringste Beeinträchtigung beim Gebrauch des Kinderwagens eintritt. Hier steht der meiste Platz zur Verfügung. Selbstverständlich wird man den Rahmen mit den Rollen so anbringen, daß die Rollen möglichst nahe am vorderen oder hinteren Ende des Kinderwagens liegen, damit sie leicht errreichbar sind.

Obwohl die Schutzabdeckungen eine gewisse Eigensteifigkeit trotz ihrer Aufrollbarkeit aufweisen können, ist es vorteilhaft, wenn in weiterer Ausgestaltung der Erfindung an dem für die Rolle vorgesehenen Rahmen Stützen für die Abdeckung angeordnet sind, damit die Abdeckung in einer bestimmten Form und einem bestimmten Abstand über dem Kinderwagen gehalten ist.

Damit Störungen im unbenutzten Zustand vermieden werden, können in weiterer Ausgestaltung der Erfindung die Stützen ausklappbar und/oder ausziehbar am Rahmen angeordnet sein.

Um eine leichte und schnelle Handhabung der Schutzvorrichtung zu unterstützen ist in vorteilhafter Ausgestaltung der Erfindung vorgesehen, daß die Abdeckung, insbesondere für den Regenschutz, aus drei Folienbahnen besteht, die eine maximale Breite entsprechend der Länge der federbelasteten Rolle aufweisen und die untereinander durch jeweils einen besonders leicht faltbaren Verbindungsstreifen miteinander verbunden sind. Bei einer solchen Ausbildung ist es nach dem Ausziehen der Schutzabdeckung nur notwendig, die beiden Seitenteile, die mit dem Mittelteil der Abdeckung verbunden sind, seitlich herabzuklappen und über den Kinderwagen auszubreiten. Beim Aufrollen wird in umgekehrter Weise vorgegangen, das heißt, die beiden Seitenteile werden auf das Mittelteil aufgelegt und können dann mittels der federbelasteten Rolle aufgerollt werden.

Um die Abdeckung im unbenutzten Zustand zu schützen und auch einen formschonen Eindruck zu erzielen, ist in Weiterbildung der Erfindung vorgesehen, daß die federbelastete Rolle in einem am Rahmen gehaltenen Schutzbehälter aufgenommen ist, aus dem die Abdeckung herausziehbar und durch Aufrollen auf die federbelastete Rolle wieder einbringbar ist.

Eine platzsparende und ästhetische Formgebung ergibt sich dadurch, daß der Schutzbehälter als Röhre ausgebildet ist und für den Durchtritt der Abdeckung eine in Längsrichtung des Schutzbehälters verlaufende, schlitzförmige Öffnung aufweist.

Eine weitere Verbesserung ergibt sich dadurch, daß am vorderen Ende der Abdeckung eine Griffleiste angeordnet ist, die im aufgerollten Zustand am Schutzbehälter als Begrenzungsanschlag anliegt. Dies ist deshalb zweckmäßig, weil nicht nur eine leicht zu erfassende Handhabe für das Herausziehen der Abdeckung geschaffen ist, sondern diese Griffleiste dient auch als Anschlag für die Beendigung des Aufrollvorganges.

Weiterhin ist es vorteilhaft, wenn die Griffleiste die Öffnung im Schutzbehälter im aufgerollten Zustand überdeckt, denn durch diese Ausgestaltung ist der Schutzbehälter verschließbar.

Die Erfindung wird nachfolgend anhand von Ausführungsbeispielen näher erläutert. In der Zeichnung zeigen
- **Figur 1:**: eine schaubildliche Darstellung eines Kinderwagens in Form eines Buggys mit der erfindungsgemäßen Schutzvorrichtung bei aufgerollter Abdeckung;
- **Figur 2:**: den Kinderwagen nach Figur 1 mit der Abdeckung in der Gebrauchsstellung;
- **Figur 3:**: eine Seitenansicht eines Kinderwagens in Kastenform;
- **Figur 4:**: eine vergrößerte Darstellung einer an einem Kinderwagen festlegbaren Schutzvorrichtung;
- **Figur 5:**: einen Schnitt nach der Linie V - V in Figur 4;
- **Figur 6:**: eine Draufsicht auf eine Schutzvorrichtung ähnlich Figur 4 mit angedeuteter, ausgezogener Abdeckung;
- **Figur 7:**: eine schaubildliche, schematische Darstellung eines Kinderwagens in Form eines Buggys mit einer abgeänderten Schutzvorrichtung;
- **Figur 8:**: den Kinderwagen nach Figur 7 mit vollständig entfalteter Schutzvorrichtung; und
- **Figur 9:**: eine Explosionsdarstellung der federbelasteten Rolle in Verbindung mit einem Schutzbehälter.

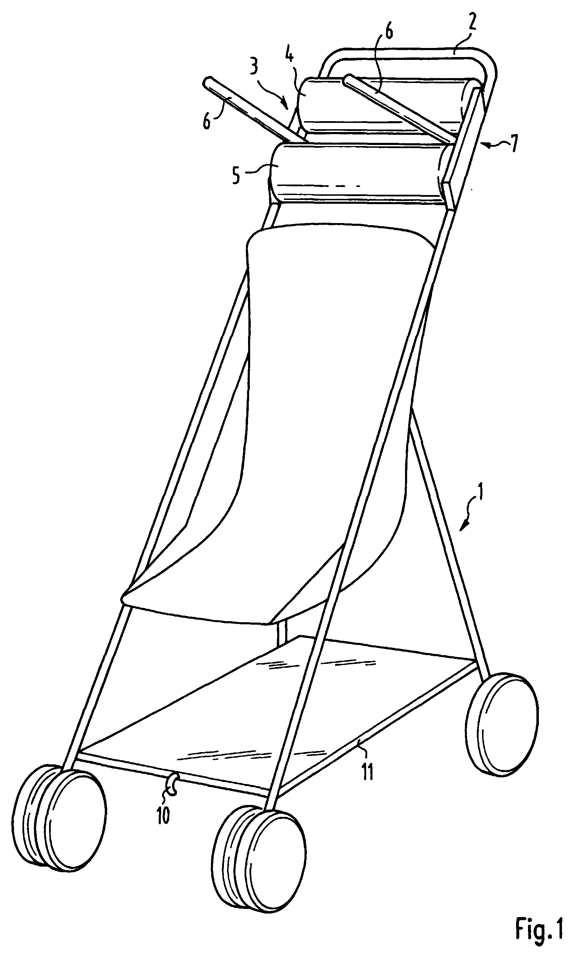

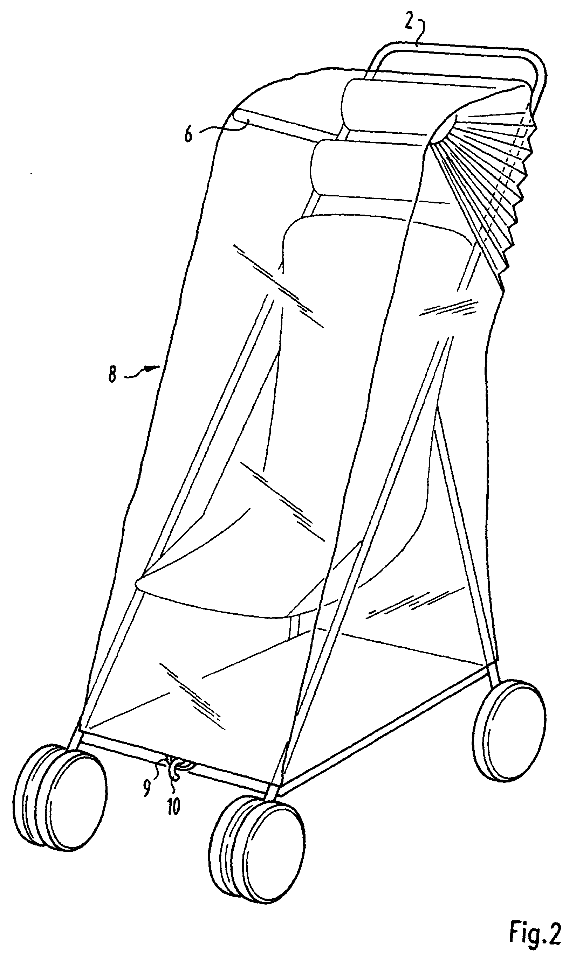

Bei einer ersten Ausführungsform, die schematisch in den Figuren 1 und 2 dargestellt ist, ist an einem insgesamt mit 1 bezeichneten Buggy an dessen Schubbügel 2 eine insgesamt mit 3 bezeichnete Schutzvorrichtung befestigt, die zwei federbelastete Rollen 4 und 5 mit jeweils aufgewickelten Abdeckungen in Form eines Regenschutzes und eines Insektenschutzes aufweist. Mit 6 sind ausklappbare und in Längsrichtung ausziehbare Stützen bezeichnet, die an einem Rahmen 7, der zur Halterung der Rollen 4 und 5 dient, schwenkbar gelagert sind.

Wie aus Figur 2 ersichtlich, dienen die Stützen 6 dazu, die insgesamt mit 8 bezeichnete Abdeckung in einer solchen Form zu halten, daß darunter ein Kind noch einigermaßen bequem sitzen kann. An dem am weitesten ausgezogenen Ende der Abdeckung 8 ist eine Öse 9 angeformt, die zum Einhängen an einen Haken 10 dient, welcher am Fahrgestell 11 des Kinderwagens angeordnet ist.

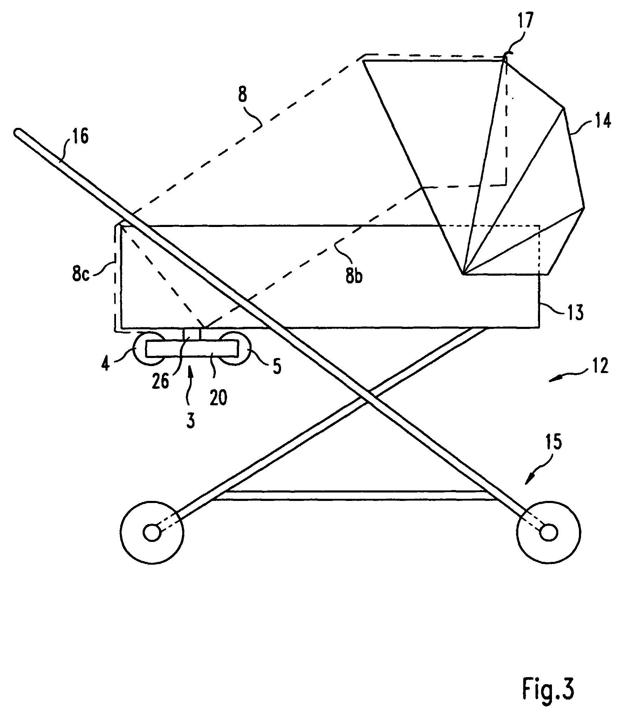

Figur 3 zeigt einen üblichen kastenförmigen Kinderwagen 12 mit dem kastenförmigen Aufsatz 13, einem Klappverdeck 14, dem Fahrgestell 15 und dem Schubbügel 16. Die insgesamt mit 3 bezeichnete Schutzvorrichtung ist an der Unterseite des kastenförmigen Aufsatzes 13 befestigt, so daß die mit gestrichelten Linien angedeutete Abdeckung 8 um den kastenförmigen Aufsatz herum bis nach oben auf das Klappverdeck 14 gezogen werden kann, wo die Abdeckung an einem Haken 17 festgehängt werden kann.

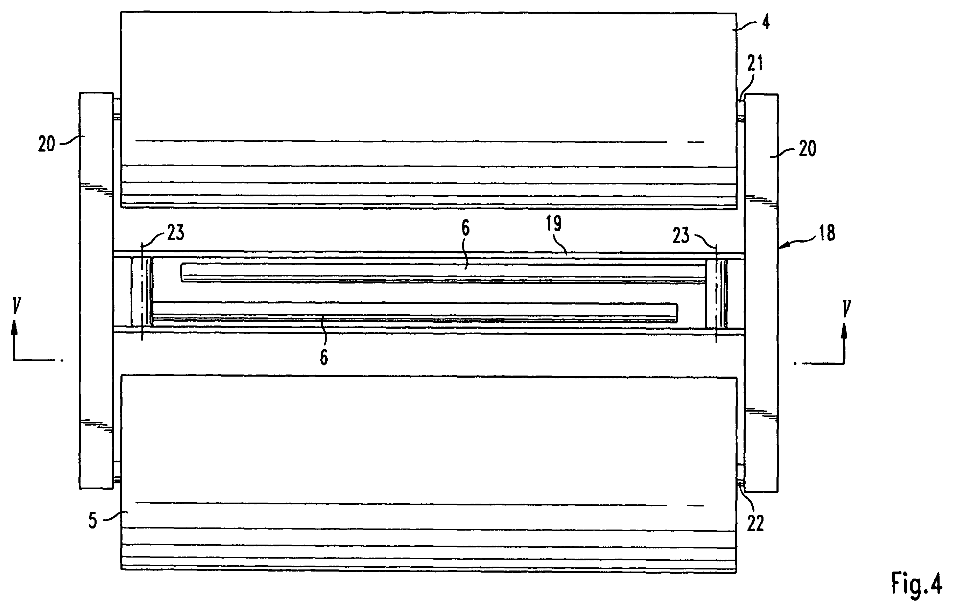

Die Schutzvorrichtung und die Abdeckung sind in den Figuren 4 bis 6 in deutlicherer Form dargestellt. Wie aus diesen Figuren ersichtlich, umfaßt die Schutzvorrichtung eine Haltevorrichtung in Form eines mehrteiligen Rahmens, der insgesamt mit 18 bezeichnet ist. Der Rahmen weist eine im wesentlichen U-förmige Grundschiene 19 und zwei seitliche Lagerschienen 20 auf. Die Grundschiene 19 und die Lagerschiene 20 ergeben einen Doppel-T-Rahmen 18, wobei die Grundschiene 19 zur Befestigung entweder am Schubbügel 2 entsprechend Figur 1 oder am Unterboden des Kinderwagenaufsatzes 13 in Verbindung mit noch weiteren Einzelteilen dient. Die Lagerschienen sind mit nicht näher dargestellten Lagern für die Achsen 21 und 22 der Rollen 4 und 5 ausgerüstet, wobei es sich bei den Rollen 4 und 5 um an sich bekannte, federbelastete Rollen wie bei Springrollos handelt. Auf diesen Rollen sind jeweils Abdeckungen in Form eines Regenschutzes und eines Insektenschutzes aufwickelbar, so daß diese Abdeckungen stets griffbereit zur Verfügung stehen.

Innerhalb der U-förmigen Grundschiene 19 sind Stützen 6 um strichpunktiert angedeutete Achsen 23 schwenkbar gelagert und können aus der in Figur 4 dargestellten eingeklappten Lage in die in Figur 1 dargestellte ausgeklappte Lage verschwenkt werden. Weiterhin sind diese Stützen 6 noch teleskopartig ausziehbar, um die Abdeckung im notwendigen Abstand zum Schutzbügel zu halten, wie dies aus Figur 2 hervorgeht.

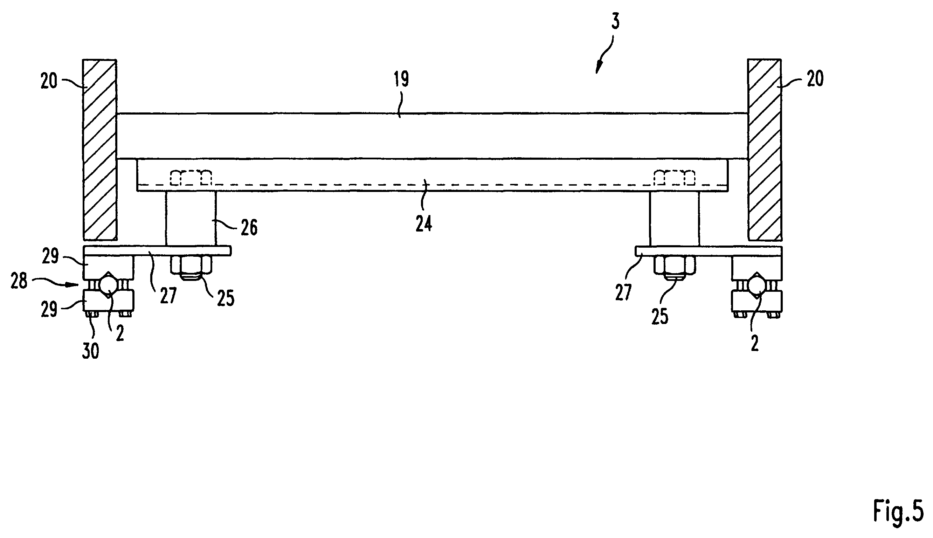

Aus Figur 5 ist eine Möglichkeit der Befestigung der Schutzvorrichtung 3 an einem Schubbügel 2 eines Kinderwagens ersichtlich. Zur losbaren Befestigung der Schutzvorrichtung 3 an dem Schubbügel 2 ist an der Basis der Befestigungsschiene 19 eine C-förmige Schiene 24 befestigt, die zur Aufnahme von Kulissensteinschrauben 25 dient, die mittels Abstandhalter 26 Halteplatten 27 tragen, an denen Klemmvorrichtungen 28 zur lösbaren Befestigung der Schutzvorrichtung 3 an dem Schubbügel 2 angeordnet sind. Diese lösbaren Klemmvorrichtungen 28 weisen jeweils zwei prismenförmige Halteklötze 29 auf, die mittels Spannschrauben 30 zusammenschraubbar sind und zwischen sich den Schubbügel 2 aufnehmen. Wenn man die Klemmvorrichtungen 28 und Halteplatten 27 wegläßt, so kann man diese Schutzvorrichtung 2 mittels der Schrauben 25 und der Abstandshalter 26 direkt am Unterboden des Kinderwagens befestigen, wie dies aus Figur 3 hervorgeht, in der in schematischer Weise die Lagerschienen 20 und der Abstandshalter 26 erkennbar sind.

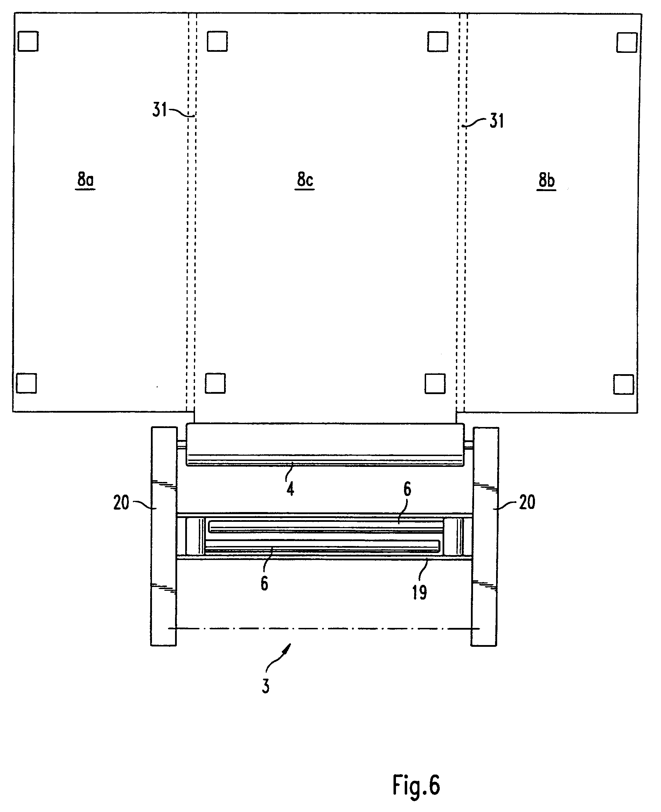

Figur 6 zeigt ein Ausführungsbeispiel für eine Abdeckung 8, die auf eine federbelastete Rolle 4 aufwickelbar ist. Damit der Schutz für den Kinderwagen ausreichend ist, muß die Abdeckung eine größere Breite, als dies der Rollenlänge entspricht, aufweisen. Damit trotzdem diese Abdeckung auf die Rolle 4 aufwickelbar ist, ist die Abdeckung 8 in drei Teile unterteilt, und zwar in ein Basisteil 8c und zwei Flügelteile 8a und 8b, die mit dem Basisteil 8c über besonders elastische Verbindungsstreifen 31 verbunden sind. Für das Aufrollen auf die federbelastete Rolle 4 werden die Seitenteile 8a und 8b auf das Grundteil 8c geklappt, so daß dann die gesamte Abdeckung 8 eine Breite aufweist, die im wesentlichen der Länge der Rolle 4 entspricht. Das Basisteil 8c kann je nach Anwendungsfall genau so lang wie die beiden Seitenteile 8a und 8b sein, es kann aber auch eine wesentlich größere Länge aufweisen, wenn dieses Basisteil, wie dies beispielsweise aus Figur 3 ersichtlich ist, ausgehend von der Rolle 4 zwischen dem Schubbügel 16 heraufgezogen werden soll, wobei im Bereich der Stirnseite des aufsetzbaren Kastens 13 die Seitenteile 8a und 8b nicht erforderlich sind, so daß die Seitenteile erst im seitlichen Bereich oberhalb des aufsetzbaren Kastens 13 beginnen. In Figur 3 ist deshalb der Bereich des Grundteiles 8c zwischen der Rolle 4 und der Oberkante des Kastens 13 ohne Seitenteile 8a und 8b gezeichnet.

In den dargestellten Ausführungsbeispielen ist auf der Rolle 4 eine Abdeckung 8 als Regenschutz dargestellt. Die Rolle 5 kann dann eine Abdeckung als Insektenschutz aufnehmen. Die Rollen sind leicht abnehmbar und austauschbar, wobei die jeweiligen Abdeckungen mit den Rollen lösbar verbunden sind, um eine Reinigung oder eine Reparatur ausführen zu können. In dem am Kinderwagen montierten Zustand sind die Abdeckungen mit den Rollen zwar lösbar, jedoch fest verbunden, so daß die für das Abrollen notwendige Zugwirkung bis zum Ende ausgeübt werden kann, ohne daß sich die Abdeckung von der Rolle lösen kann. Für das Aufwickeln genügt ein zusätzlicher Zug, um den in der Rolle vorgesehenen Rastmechanismus zu lösen, damit unter der Federwirkung die Abdeckung wieder auf die Rolle aufgewickelt werden kann, wie dies von den sogenannten Springrollos bekannt ist.

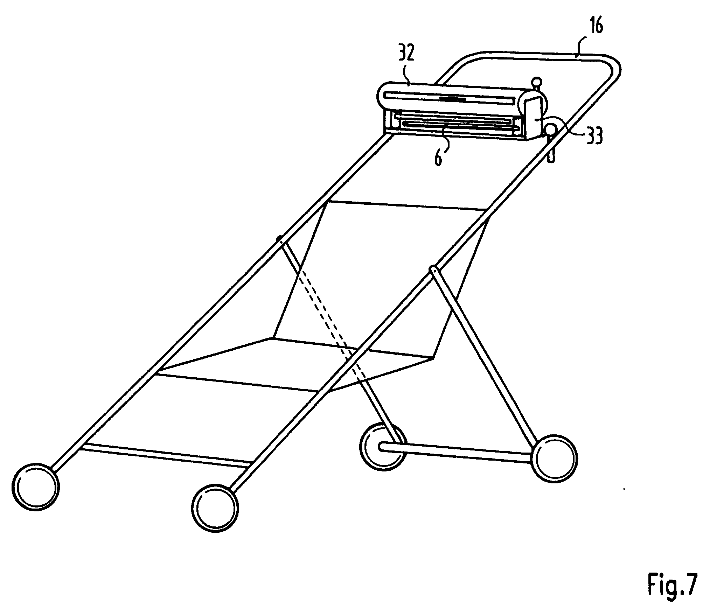

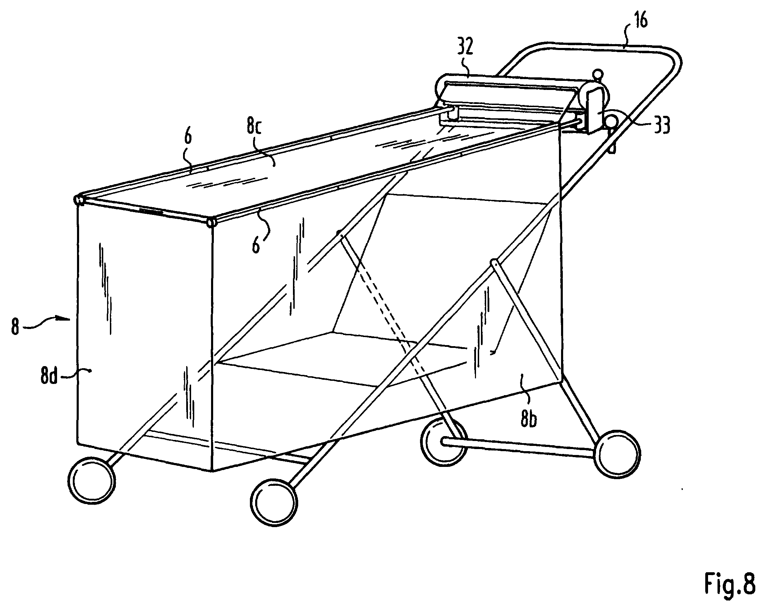

Die Figuren 7 und 8 zeigen einen Buggy mit einer abgeänderten Ausführungsform einer Schutzvorrichtung, wobei Figur 7 die Schutzvorrichtung im unbenutzten und die Figur 8 die Schutzvorrichtung im völlig ausgezogenen Zustand darstellt. Die Abänderung besteht darin, daß die federbelastete Rolle zusammen mit der aufgerollten Abdeckung 8 in einem Schutzbehälter 32 aufgenommen ist, der an einem am Schubbügel 16 angeordneten Rahmen 33 unverdrehbar gehalten ist. Der Rahmen 33 trägt unterhalb des Schutzbehälters 32 die beiden ausklappbaren und ausziehbaren Stützen 6, die, wie aus Figur 7 ersichtlich, an dem Rahmen 33 übereinanderliegend gehalten sind und in dieser eingeklappten Lage nicht stören können. In der in Figur 8 dargestellten und ausgezogenen Stellung tragen diese Stützen 6 die in Figur 6 dargestellte Abdeckung 8, die im vorliegenden Ausführungsbeispiel noch mit einem Vorderteil 8d ausgerüstet ist.

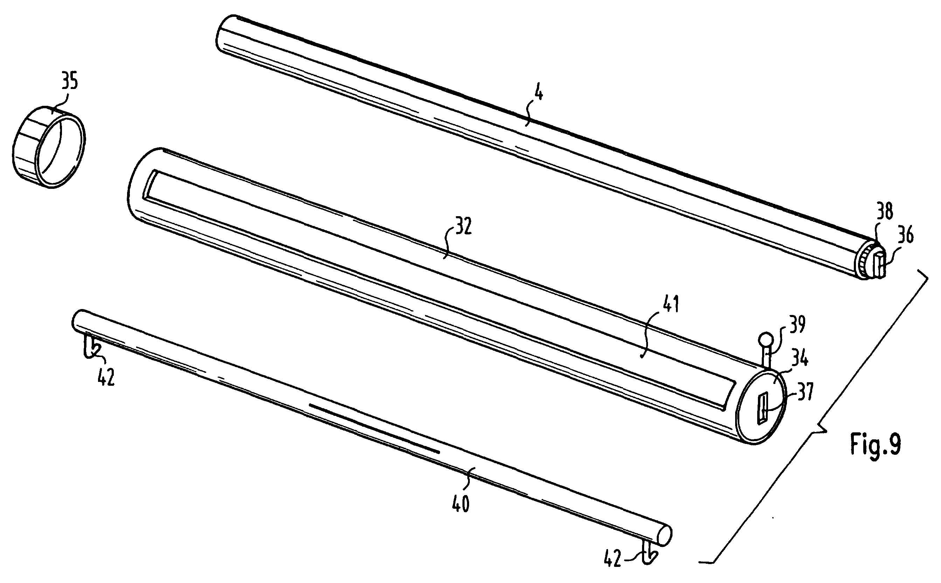

Figur 9 zeigt den Schutzbehälter 32 in Einzeldarstellung. Dieser Schutzbehälter besteht aus einer Röhre, die an einem Ende einen festen Deckel 34 und am gegenüberliegenden Ende eine aufschiebbare Kappe 35 umfaßt. Von diesem Ende aus, das im Gebrauchszustand die Kappe 35 aufnimmt, wird die federbelastete Rolle 4 eingeschoben, die mit einem zungenartigen Widerlager 36 durch einen Schlitz 37 im festen Deckel 34 greift. Dieses Widerlager dient zur Abstützung der die Rolle 4 belastenden Feder. Ein Zahnrad 38, das an dem Ende mit dem Widerlager 36 befestigt ist, wirkt mit einem Sperrhebel 39 zusammen, um die federbelastete Rolle 4 bei unterschiedlich weit herausgezogener Abdeckung zu blockieren. Mit 40 ist eine Griffleiste bezeichnet, die am Ende des Basisteiles 8c der Abdeckung befestigt ist. Diese Griffleiste ist länger als eine schlitzförmige Öffnung 41 im Schutzbehälter, aus der die Abdeckung 8 herausziehbar und durch Aufrollen wieder einbringbar ist. Aufgrund der größeren Länge der Griffleiste 40 dient diese als Endanschlag beim Aufrollen der Abdeckung 8. Obwohl aus der schematischen Darstellung nicht ohne weiteres erkennbar, sind die Abmessungen der Griffleiste 40 so gewählt, daß sie im aufgerollten Zustand der Abdeckung die Öffnung 41 verschließt. In der Nähe der Enden der Griffleiste 40 angeordnete Haken 42 dienen zum Einhängen an den Enden der ausgezogenen Stützen 6. Das Vorderteil 8d ist an der Griffleiste 40 befestigt und wird vor dem Einrollvorgang auf das Basisteil 8c aufgelegt und zusammen mit diesem eingerollt.

## Patentansprüche

1. Schutzvorrichtung für Kinderwagen mit einer zusammenfaltbaren Abdeckung und einer am Kinderwagen festlegbaren Haltevorrichtung, mit der die Abdeckung verbindbar ist und die zur Aufnahme der Abdeckung im unbenutzten Zustand dient, **dadurch gekennzeichnet,** daß die Haltevorrichtung (18) einen lösbar am Kinderwagen festlegbaren Rahmen (19, 20) und mindestens eine am Rahmen anbringbare, in Drehrichtung federbelastete Rolle (4) zum Aufwickeln der Abdeckung (8) im zusammengefalteten Zustand aufweist, mit der die Abdeckung lösbar verbunden ist.

2. Schutzvorrichtung nach Anspruch 1, **dadurch gekennzeichnet,** daß der Rahmen (18) zumindest eine Lagervorrichtung für eine zugeordnete, federbelastete Rolle (4) aufweist.

3. Schutzvorrichtung nach Anspruch 2, **dadurch gekennzeichnet,** daß der Rahmen (18) zwei Lagervorrichtungen für die Aufnahme von zwei federbelasteten Rollen (4, 5) aufweist, von denen eine (4) für die Aufnahme einer Regenabdeckung und die andere (5) für die Aufnahme einer Insektenschutzabdeckung vorgesehen ist.

4. Schutzvorrichtung nach einem der Ansprüche 1 bis 3, **dadurch gekennzeichnet,** daß der Rahmen (18) mit Klemmen (28) für die lösbare Befestigung am Schubbügel (2) des Kinderwagens versehen ist.

5. Schutzvorrichtung nach einem der Ansprüche 1 bis 3, **dadurch gekennzeichnet,** daß am Boden des Kinderwagens Halterungen (25, 26) für die lösbare Befestigung des Rahmens (18) vorgesehen sind.

6. Schutzvorrichtung nach einem der Ansprüche 1 bis 5, **dadurch gekennzeichnet,** daß an dem für die Rollen (4, 5) vorgesehenen Rahmen (18) Stützen (6) für die Abdeckung (8) angeordnet sind.

7. Schutzvorrichtung nach Anspruch 6, **dadurch gekennzeichnet,** daß die Stützen (6) ausklappbar und/oder ausziehbar am Rahmen (18) angeordnet sind.

8. Schutzvorrichtung nach einem der Ansprüche 1 bis 7, **dadurch gekennzeichnet,** daß die Abdeckung (8) insbesondere für den Regenschutz aus drei Folienbahnen (8a, 8b, 8c) besteht, die eine maximale Breite entsprechend der Länge der federbelasteten Rolle (4) aufweisen und die untereinander durch jeweils einen besonders leicht faltbaren Verbindungsstreifen (31) miteinander verbunden sind.

9. Schutzvorrichtung nach einem der Ansprüche 1 bis 8, **dadurch gekennzeichnet,** daß die federbelastete Rolle in einem am Rahmen (33) gehaltenen Schutzbehälter (32) aufgenommen ist, aus dem die Abdeckung (8) herausziehbar und durch Aufrollen auf die federbelastete Rolle (4) wieder einbringbar ist.

10. Schutzvorrichtung nach Anspruch 9, **dadurch gekennzeichnet,** daß der Schutzbehälter (32) als Röhre ausgebildet ist und für den Durchtritt der Abdeckung (8) eine in Längsrichtung des Schutzbehälters (32) verlaufende, schlitzförmige Öffnung (41) aufweist.

11. Schutzvorrichtung nach Anspruch 9 oder 10, **dadurch gekennzeichnet,** daß am vorderen Ende der Abdeckung (8) eine Griffleiste (40) angeordnet ist, die im aufgerollten Zustand am Schutzbehälter (32) als Endbegrenzungsanschlag anliegt.

12. Schutzvorrichtung nach Anspruch 11, **dadurch gekennzeichnet,** daß die Griffleiste (40) die Öffnung (41) im Schutzbehälter (32) im aufgerollten Zustand überdeckt.
